# EUROPÄISCHE PATENTANMELDUNG

(11) **EP 4 693 095 A1**
(43) Veröffentlichungstag der Anmeldung: **11.02.2026**
(21) Anmeldenummer: 25189036.4
(22) Anmeldetag: 11.07.2025
(51) Int. Cl.: G06K 7/00

(54) **RFID-SYSTEM MIT VERGRÖSSERTER REICHWEITE**

(30) Priorität: 30.07.2024 DE 102024121633
(71) Anmelder: SICK AG, 79183 Waldkirch (DE)
(72) Erfinder: SOCK, Bjoern, 21629 Neu Wulmstorf (DE); PUDENZ, Florian, 22359 Hamburg (DE); SCHMIDT, Vincent, 22303 Hamburg (DE)
(74) Vertreter: Manitz Finsterwald Patent- und Rechtsanwaltspartnerschaft mbB

(57) **Zusammenfassung**

Ein System zur Identifikation mittels Radiofrequenz (RFID-System) umfasst ein primäres RFID-Lesegerät, einen RFID-Transponder und eine Vorrichtung zur Erweiterung der Reichweite des primären RFID-Lesegeräts, die einen Sender aufweist, der elektromagnetische Wellen in einen vorgegebenen Raumbereich hinein emittiert. Der RFID-Transponder ist ausgebildet, die elektromagnetischen Wellen zu empfangen, die von der Vorrichtung bzw. deren Sender emittiert werden.

## Beschreibung

Die Erfindung betrifft ein RFID-System (RFID von Engl.: radio frequency identification), d.h. ein System zur Identifikation, das im Radiofrequenzbereich arbeitet. Das RFID-System umfasst ein RFID-Lesegerät und einen RFID-Transponder.

RFID-Systeme werden in vielen technischen Bereichen verwendet und umfassen einen oder mehrere RIFD-Transponder, die auch als RFID-Tags oder RFID-Antwortsender bezeichnet werden, sowie ein oder mehrere RFID-Lesegeräte. Um eine Identifikation erfolgreich durchführen zu können, muss der RFID-Transponder in einem vorgegebenen Identifikationsbereich in der Nähe des RFID-Lesegeräts angeordnet sein. Der RFID-Transponder empfängt in diesem Identifikationsbereich ein Signal in Form von elektromagnetischen Wellen im Radiofrequenzbereich, die das RFID-Lesegerät emittiert. Da RFID-Transponder üblicherweise keine Energiequelle wie beispielsweise eine Batterie aufweisen, dient das von dem RFID-Lesegerät empfangene Signal einerseits dazu, den RFID-Transponder mit Energie zu versorgen und dessen elektronische Elemente sozusagen aufzuwecken, und andererseits dazu, ein Antwortsignal von dem RFID-Transponder anzufordern, das ein Sender des RFID-Transponders anschließend zur Identifikation an das RFID-Lesegerät sendet.

Der vorgegebene Identifikationsbereich des RFID-Lesegeräts, der für RFID-Transponder vorgesehen ist, ist durch die Ausgangsleistung, die das RFID-Lesegerät mittels seines Senders emittiert, durch die Empfindlichkeit eines Empfängers des RFID-Lesegeräts und durch einen Schwellenwert für eine minimalen Energiemenge oder Leistung begrenzt, die für den Betrieb bzw. das Aufwecken des RFID-Transponders erforderlich ist. Die Ausgangsleistung des RFID-Lesegeräts ist in vielen Ländern und Regionen gesetzlich limitiert. Der Schwellenwert für die Energie bzw. Leistung zum Aufwecken und Betreiben des RFID-Transponders kann ferner dadurch erhöht sein, dass der RFID-Transponder weitere elektrische oder elektronische Einrichtungen aufweist, z.B. einen oder mehrere Sensoren für Licht, Bewegung oder Temperatur oder Bauelemente zur Ausgabe akustischer oder optischer Signale wie etwa Piepser oder LEDs.

In Umgebungen mit metallischen Objekten können ferner Bereiche entstehen, in denen aufgrund von Interferenzmustern elektromagnetischer Wellen nur sehr geringe Feldstärken für den Betrieb des RFID-Systems erzeugt werden können. Insgesamt kann die Reichweite des RFID-Lesegeräts daher in Abhängigkeit von den Umgebungsbedingungen und den jeweils verwendeten RFID-Transpondern eingeschränkt sein.

Eine Aufgabe der Erfindung besteht darin, ein RFID-System zu schaffen, bei dem die Reichweite eines RFID-Lesegeräts mit geringem Aufwand erweitert werden kann.

Diese Aufgabe wird durch ein System mit den Merkmalen des Anspruchs 1 gelöst. Vorteilhafte Weiterbildungen der Erfindung sind in den Unteransprüchen, der Beschreibung und den Zeichnungen angegeben.

Das System umfasst ein primäres RFID-Lesegerät, einen RFID-Transponder und eine Vorrichtung zur Erweiterung der Reichweite des primären RFID-Lesegeräts, die einen Sender aufweist, der ausgebildet ist, elektromagnetische Wellen in einen vorgegebenen Raumbereich hinein zu emittieren. Der RFID-Transponder ist ausgebildet, die elektromagnetischen Wellen zu empfangen, die von der Vorrichtung bzw. deren Sender emittiert werden.

Die Vorrichtung ist zur Erweiterung der Reichweite des Systems vorgesehen, das zur Identifikation mittels Radiofrequenz (RFID-Systems) dient, indem der RFID-Transponder mittels des Senders innerhalb des vorgegebenen Raumbereichs zusätzlich mit einer vorbestimmten Energiemenge versorgt wird, die mittels der elektromagnetischen Wellen bereitgestellt wird. Die Energieversorgung des RFID-Transponders mittels des Senders der Vorrichtung erfolgt zusätzlich zu einer möglicherweise ohnehin vorhandenen Energieversorgung, die beispielsweise dadurch erzeugt wird, dass das RFID-Lesegerät mit dem RFID-Transponder in Verbindung steht. Beispielsweise aufgrund von Umgebungsbedingungen oder aufgrund einer begrenzten Sende- und/oder Empfangsleistung eines RFID-Lesegeräts reicht eine solche Standard-Energieversorgung innerhalb des Systems möglicherweise in dem vorgegebenen Raumbereich nicht aus, um den RFID-Transponder zu aktivieren.

Daher bewirkt die Vorrichtung mit Sender innerhalb des erfindungsgemäßen Systems, dass unabhängig von den Umgebungsbedingungen und der Standard-Energieversorgung eine vorbestimmte Energiemenge in dem vorgegebenen Raumbereich bereitgestellt wird und der RFID-Transponder zuverlässig betrieben werden kann. Dies gilt beispielsweise für vorgegebene Raumbereiche mit metallischen Gegenständen, in denen das RFID-Lesegerät aufgrund von Interferenzmustern nur eine sehr geringe Feldstärke für den Betrieb bzw. das Aufwecken eines RFID-Transponders zur Verfügung stellen kann. Außerdem kann die Vorrichtung eine zuverlässige Energieversorgung in dem vorgegebenen Raumbereich sicherstellen, wenn der RFID-Transponder mit zusätzlichen elektrischen oder elektronischen Einrichtungen ausgestattet ist und dadurch eine erhöhte minimale Energiemenge erforderlich ist, um den RFID-Transponder zu aktivieren und zu betreiben.

Durch die zusätzliche Energieversorgung mittels der Vorrichtung kann somit die Reichweite des Systems erweitert werden, insbesondere in solchen Raumbereichen, in denen ansonsten nur eine sehr geringe Feldstärke mittels des RFID-Lesegeräts erzeugt werden würde und die Kommunikation zwischen einem RFID-Transponder und dem RFID-Lesegerät eingeschränkt wäre. Außerdem kann aufgrund der Vorrichtung darauf verzichtet werden, den RFID-Transponder mit einer eigenen Energiequelle wie etwa einer Batterie zu versehen. Es kann also innerhalb des Systems aufgrund der Vorrichtung ein kostengünstiger RFID-Transponder ohne eigene Energiequelle bzw. Batterie verwendet werden.

Gemäß einer Ausführungsform emittiert der Sender die elektromagnetischen Wellen kontinuierlich. Mit anderen Worten arbeitet der Sender im sogenannten cw-Betrieb (cw von Engl.: continuous wave) bzw. Dauerstrich-Betrieb. Der Sender kann sein Signal somit in einem Betriebsmodus emittieren, der sich von dem Betriebsmodus unterscheidet, in dem die Signale zur Kommunikation zwischen dem primären RFID-Lesegerät und dem RFID-Transponder gesendet werden. Diese Komponenten des RFID-Systems senden ihre Signale nämlich üblicherweise nur kurzzeitig, beispielsweise zum Abfragen der Identifikation und zum Senden eines entsprechenden Identifikationsmusters. Zusätzlich kann der Sender die elektromagnetischen Wellen in einem vorbestimmten Frequenzbereich emittieren, der außerhalb eines Frequenzbereichs bzw. Frequenzkanals liegt, der für eine Kommunikation zwischen dem RFID-Lesegerät und dem RFID-Transponder verwendet wird. Durch solche unterschiedlichen Betriebsmodi können Störungen der Kommunikation zwischen den Komponenten des RFID-Systems durch die elektromagnetischen Wellen des Senders der Vorrichtung verhindert werden, die zur zusätzlichen Energieversorgung des RFID-Transponders vorgesehen sind.

Der Sender kann ferner mindestens zwei Antennen aufweisen, die insbesondere eine kohärente Speisung bzw. Zuführung aufweisen können. Durch mindestens zwei Antennen des Senders kann die Direktivität bzw. Richtcharakteristik der emittierten elektromagnetischen Wellen in einen vorgegebenen Raumbereich hinein verbessert werden.

Gemäß einer weiteren Ausführungsform ist der Sender in ein sekundäres RFID-Lesegerät integriert, welches von dem primären RFID-Lesegerät verschieden ist. Die Vorrichtung zur Erweiterung der Reichweite des RFID-Systems kann somit Teil dieses sekundären RFID-Lesegeräts bzw. RFID-Readers sein. Da ein solches sekundäres RFID-Lesegerät bereits Teil eines bestehenden RFID-Systems sein kann, ist möglicherweise kein zusätzlicher Bauraum für die Installation des zusätzlichen Senders für die Energieversorgung des RFID-Transponders erforderlich.

Das primäre RFID-Lesegerät kann ferner zusätzlich ausgebildet sein, Informationen zur Kommunikation mit dem RFID-Transponder an das sekundäre RFID-Lesegerät zu übertragen. Das System kann bei dieser Ausführungsform somit zwei oder mehr RFID-Lesegeräte umfassen, die zur Erweiterung der Reichweite zusammenwirken.

Das sekundäre RFID-Lesegerät kann die Reichweite des primären RFID-Lesegeräts somit einerseits durch die zusätzliche Energieversorgung mittels des Senders, der die elektromagnetischen Wellen für den RFID-Transponder emittiert, und andererseits zusätzlich durch die Kommunikation zwischen dem primären und sekundären RFID-Lesegerät erweitern. Durch die Übertragung der Information zur Kommunikation mit dem RFID-Transponder auf das sekundäre RFID-Lesegerät kann dieses ebenso mit dem RFID-Transponder in Kontakt treten und entsprechende Kommunikationssignale senden und/oder empfangen. Insbesondere kann das primäre RFID-Lesegerät als Interrogator arbeiten und als einziges RFID-Lesegerät ein Signal zur Aktivierung bzw. Abfrage des RFID-Transponders senden, während ein oder mehrere sekundäre RFID-Lesegeräte lediglich als Empfänger arbeiten, indem sie eine sogenannte Listen-Before-Talk-Routine ausführen.

Bei einer alternativen Ausführungsform kann der Sender jedoch in eine eigenständige Vorrichtung außerhalb eines primären RFID-Lesegeräts integriert sein, und der Sender der Vorrichtung zur Erweiterung der Reichweite kann lediglich ein cw-Signal bzw. Dauerstrich-Signal in einen vorbestimmten Raumbereich senden, um in diesem die Energieversorgung des RFID-Transponders sicherzustellen. Die Vorrichtung, die den Sender umfasst, kann bei dieser Ausführungsform nur mit dem Sender und ohne Empfangseinheit ausgestattet sein. Insbesondere kann die Vorrichtung, die den Sender umfasst, bezogen auf das primäre RFID-Lesegerät beabstandet, getrennt und/oder in einem separaten Gehäuse ausgebildet sein.

Gemäß einer weiteren Ausführungsform des Systems steht das primäre RFID-Lesegerät mit der Vorrichtung zur Erweiterung der Reichweite in Verbindung, um den Sender der Vorrichtung zu steuern. Das primäre RFID-Lesegerät kann folglich sozusagen als Master mit der Vorrichtung bzw. mit deren Sender als zusätzliche Energiequelle kommunikativ in Verbindung stehen, um den Sender geeignet zu steuern. Beispielsweise kann der Sender mittels eines jeweiligen Signals des primären RFID-Lesegeräts aktiviert und deaktiviert werden.

Gemäß einer weiteren Ausführungsform ist dem RFID-Transponder und dem primären RFID-Lesegerät ein primärer Frequenzbereich zugeordnet, in dem eine signaltechnische Kommunikation zwischen dem RFID-Transponder und dem primären RFID-Lesegerät erfolgt. Dem Sender der Vorrichtung zur Erweiterung der Reichweite ist bei dieser Ausführungsform ein sekundärer Frequenzbereich zugeordnet, der von dem primären Frequenzbereich verschieden ist. Um eine zusätzliche Energiequelle zu bilden, emittiert der Sender die elektromagnetischen Wellen somit in einem anderen Frequenzbereich als das primäre RFID-Lesegerät. Dadurch kann der Sender bei der zusätzlichen Energieversorgung des RFID-Transponders die Kommunikation zwischen diesem und dem primären RFID-Lesegerät oder weiteren RFID-Lesegeräten nicht stören.

Außerdem sind innerhalb der EU derzeit vier Frequenzkanäle oder Frequenzbereiche für eine Kommunikation von RFID-Systemen zugelassen, wobei ferner die Ausgangsleistung der RFID-Lesegeräte für diese vier Frequenzkanäle gesetzlich limitiert ist. Wenn die Kommunikation zwischen dem RFID-Transponder und dem primären RFID-Lesegerät wie bei der vorliegenden Ausführungsform auf einem dieser Frequenzkanäle erfolgt, kann ein anderer Frequenzbereich außerhalb der vier zugelassenen Frequenzkanäle für die Energieversorgung des RFID-Transponders genutzt werden, um sozusagen ein Grundniveau der Energie in dem vorgegebenen Raumbereich bereitzustellen. Dies kann beispielsweise mit weiteren Antennen des primären oder sekundären RFID-Lesegeräts erfolgen, die von derjenigen Antenne verschieden sind, die für die Kommunikation zwischen dem primären RFID-Lesegerät und dem RFID-Transponder vorgesehen ist. Aufgrund der Energieversorgung über einen Frequenzbereich außerhalb der vier zur Kommunikation zugelassenen Frequenzkanäle kann ein niedriges Energieniveau auf dem Kommunikationskanal des primären oder sekundären RFID-Lesegeräts ausreichen, um den RFID-Transponder beispielsweise mittels eines Triggersignals aufzuwecken bzw. abzufragen und mit diesem zu kommunizieren.

Gemäß einer weiteren Ausführungsform ist dem primären RFID-Lesegerät ein Soll-Raumbereich für eine Kommunikation zwischen dem RFID-Transponder und dem RFID-Lesegerät zugeordnet. Der Sender der Vorrichtung zur Erweiterung der Reichweite kann derart angeordnet sein, dass er die elektromagnetischen Wellen in den Soll-Raumbereich hinein emittiert. Beispielsweise kann sich der Sender näher an dem Soll-Raumbereich befinden bzw. einen geringeren Abstand zu diesem aufweisen als das primäre RFID-Lesegerät.

Der RFID-Transponder muss sich bei dieser Ausführungsform in dem Soll-Raumbereich befinden, um mit dem primären RFID-Lesegerät kommunizieren zu können. Die Verstärkung des Radiofrequenzfeldes mittels des Senders erfolgt also bei dieser Ausführungsform hauptsächlich innerhalb des vorgegebenen Soll-Raumbereichs, der zur Kommunikation mit dem RFID-Transponder vorgegeben ist und der durch eine Standard-Energieversorgung mittels des RFID-Lesegeräts möglicherweise nicht abgedeckt ist.

Weiterer Gegenstand der Erfindung ist ferner ein RFID-Lesegerät, das eine primäre Sendeeinrichtung zur Kommunikation mit einem RFID-Transponder und eine zusätzliche Sendeeinrichtung aufweist, die zur Energieversorgung des RFID-Transponders elektromagnetische Wellen in einen vorgegebenen Raumbereich emittiert.

Mit anderen Worten ist die vorstehend beschriebene Vorrichtung zur Erweiterung der Reichweite bzw. deren Sender a priori in ein solches RFID-Lesegerät integriert. Daher gelten die vorstehenden Ausführungsformen entsprechend auch für das RFID-Lesegerät mit primärer und zusätzlicher Sendeeinrichtung. Dies gilt insbesondere hinsichtlich der Vorteile und der bevorzugten Ausführungsformen. Weiterhin versteht es sich, dass sämtliche hierin genannten Merkmale miteinander kombinierbar sind, sofern nicht explizit etwas Gegenteiliges angegeben ist.

Gemäß einer Ausführungsform des RFID-Lesegerät emittiert die zusätzliche Sendeeinrichtung die elektromagnetischen Wellen kontinuierlich. Alternativ oder zusätzlich kann der primären Sendeeinrichtung ein primärer Frequenzbereich und der zusätzlichen Sendeeinrichtung ein sekundärer Frequenzbereich zugeordnet sein, der von dem primären Frequenzbereich verschieden ist.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: ein RFID-System gemäß dem Stand der Technik,
- Fig. 2: ein erfindungsgemäßes RFID-System gemäß einer ersten Ausführungsform und
- Fig. 3: ein erfindungsgemäßes RFID-System gemäß einer zweiten Ausführungsform.

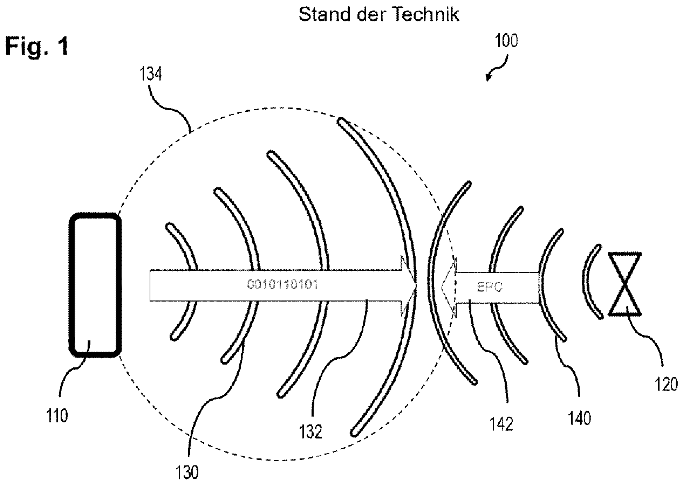

Fig. 1 zeigt schematisch ein System zur Identifikation mittels Radiofrequenz (RFID-System) 100, das ein RFID-Lesegerät 110 und einen RFID-Transponder 120 umfasst, der auch als RFID-Antwortsender oder RFID-Tag bezeichnet wird. Das System 100 ermöglicht eine Identifizierung des RFID-Tags mittels elektromagnetischer Wellen im Radiofrequenzbereich.

Das RFID-Lesegerät 110 emittiert elektromagnetische Wellen 130, um ein Abfragesignal 132 in einen Standard-Identifikationsbereich 134 in der Nähe des RFID-Lesegeräts 110 zu senden. Das Abfragesignal 132 ist durch eine Sequenz von Nullen und Einsen veranschaulicht, während der Standard-Identifikationsbereich 134 in Fig. 1 mit gestrichelten Linien angedeutet ist.

Wenn sich der RFID-Transponder 120 innerhalb des Standard-Identifikationsbereichs 134 in der Nähe des RFID-Lesegeräts 110 befindet, d.h. innerhalb einer Reichweite des RFID-Lesegeräts 110 von beispielsweise 8 bis 10 m, kann der RFID-Transponder 120 das von dem RFID-Lesegerät 110 gesendete Abfragesignal 132 mittels eines nicht dargestellten Empfängers empfangen. Dies ist notwendig, da der RFID-Transponder 120 keine eigene Energiequelle wie etwa eine Batterie aufweist.

Die beispielhafte Reichweite von 8 bis 10 m bezieht sich dabei auf eine kapazitive Kopplung zwischen dem RFID-Lesegerät 110 und dem RFID-Transponder 120. Im Gegensatz dazu erfordern RFID-Systeme mit induktiver Kopplung, wie beispielsweise Kreditkarten, eine Annäherung des Transponders an das Lesegerät bis auf einige Millimeter, um eine Identifizierung durchführen zu können.

Die von dem RFID-Transponder 120 emittierten elektromagnetischen Wellen 130, die das RFID-Lesegerät 110 emittiert, sind ferner dafür vorgesehen, dass für einen interner Gleichrichter (nicht dargestellt) des RFID-Transponders 120 eine ausreichende Energiemenge zur Verfügung gestellt werden sollte, um den RFID-Transponder zu aktivieren bzw. "aufzuwecken" und dessen weitere interne Elemente bzw. elektronische Einheiten in Betrieb zu nehmen. Dadurch wird der RFID-Transponder 120 in die Lage versetzt, mittels eines Senders ebenfalls elektromagnetische Wellen 140 zu emittieren und ein Antwortsignal 142 an das RFID-Lesegerät 110 zu senden. Das Antwortsignal 142 umfasst beispielsweise einen elektronischen Produktcode, der in Fig. 1 bis 3 mit EPC bezeichnet ist. Anhand des Antwortsignals 142 kann das RFID-Lesegerät den RFID-Transponder bzw. RFID-Tag 120 identifizieren.

Die Reichweite bzw. der Standard-Identifikationsbereich 134 des RFID-Lesegeräts 110 für die Identifikation des RFID-Transponders 120 ist durch spezifische Eigenschaften sowohl des RFID-Lesegeräts 110 als auch des RFID-Transponders 120 begrenzt. Diese spezifischen Eigenschaften umfassen einerseits die Ausgangsleistung eines Senders des RFID-Lesegeräts 110, d.h. den Energieinhalt der emittierten elektromagnetischen Wellen 130, und die Sensitivität eines Empfängers des RFID-Lesegeräts 110 sowie andererseits einen Schwellenwert einer minimalen Energie bzw. Eingangsleistung für die Aktivierung bzw. den Betrieb des RFID-Transponders 120. Ferner ist die maximale Ausgangsleistung des RFID-Lesegeräts 110 in vielen Ländern und Regionen gesetzlich vorgegeben.

Dieser Schwellenwert für die minimale Eingangsleistung zum Aktivieren des RFID-Transponders 120 kann dadurch erhöht sein, dass der RFID-Transponder 120 zusätzliche elektrische oder elektronische Einrichtungen aufweist, wie beispielsweise Sensoren für Licht, Bewegung oder Temperatur oder Einrichtungen zum Emittieren akustischer oder optischer Signale, z.B. Piepser oder LEDs. Außerdem können metallische Gegenstände in der Umgebung des RFID-Lesegeräts 110 bewirken, dass aufgrund von Interferenzmustern Bereiche mit einer sehr geringen Feldstärke bzw. einem sehr geringen Energieinhalt der emittierten elektromagnetischen Wellen 130 entstehen. Insgesamt kann der Standard-Identifikationsbereich 134 des RFID-Lesegeräts 110 aufgrund von Umgebungsbedingungen, z.B. in Bereichen mit metallischen Gegenständen, und aufgrund der Beschaffenheit des RFID-Transponders 120 eingeschränkt sein.

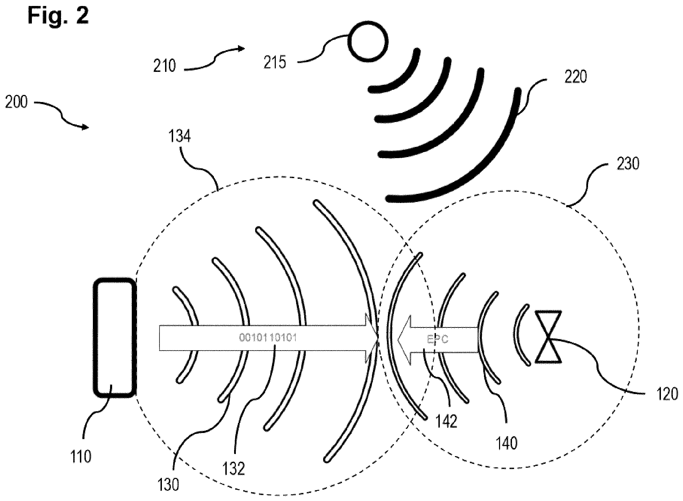

Um die Reichweite des RFID-Lesegeräts 110 über den möglicherweise eingeschränkten Identifikationsbereich 134 hinaus zu erweitern, umfasst eine erste Ausführungsform eines erfindungsgemäßen RFID-Systems, die- in Fig. 2 dargestellt und mit 200 bezeichnet ist, eine zusätzliche Vorrichtung bzw. Sendeeinrichtung 210 mit einem Sender 215. Ansonsten umfasst das RFID-System 200 von Fig. 2 die gleichen Elemente wie das RFID-System 100 von Fig. 1, d.h. das RFID-Lesegerät 110 und den RFID-Transponder 120, so dass die vorstehende Beschreibung des RFID-Systems von Fig. 1 auch für das RFID-System 200 von Fig. 2 gültig ist.

Der Sender 215 emittiert der elektromagnetische Wellen 220 in einem vorbestimmten Frequenzbereich. Dieser vorbestimmte Frequenzbereich ist derart festgelegt, dass der RFID-Transponder 120 in der Lage ist, die elektromagnetischen Wellen 220 zu empfangen. Ferner ist der vorbestimmte Frequenzbereich für die elektromagnetischen Wellen 220 von dem Frequenzbereich bzw. den Frequenzkanälen verschieden, in bzw. auf dem das RFID-Lesegerät 110 und der RFID-Transponder 120 die elektromagnetischen Wellen 130 bzw. 140 emittieren.

Der Sender 215 emittiert die elektromagnetischen Wellen 220 in einen vorgegebenen oder vorbestimmten Soll-Raumbereich 230, in welchem folglich die zur Verfügung stehende Feldstärke bzw. der Energieinhalt der elektromagnetischen Wellen insgesamt durch den zusätzlichen Sender 215 erhöht ist. Da der RFID-Transponder 120 in der Lage ist, die elektromagnetischen Wellen 220 zusätzlich zu empfangen, die der Sender 215 emittiert, bildet der Sender 215 eine zusätzliche Energieversorgung für den RFID-Transponder 120 innerhalb des vorbestimmten Raumbereichs 230. Im Detail verwenden ein Gleichrichter des RFID-Transponders 120 und elektronische Bauelemente innerhalb eines integrierten Schaltkreises des RFID-Transponders 120, welche die Kommunikationssignale des RFID-Lesegeräts 110 verarbeiten, unterschiedliche Frequenzen bzw. Frequenzbereiche.

Der RFID-Transponder 120 des erfindungsgemäßen RFID-Systems 200 kann daher schon in Raumbereichen mit einer größeren Entfernung zum RFID-Lesegerät 110 aktiviert bzw. aufgeweckt werden, d.h. in einem größeren Raumbereich als in dem Standard-Identifikationsbereich 134, der allein durch das RFID-Lesegerät 110 in Kombination mit dem RFID-Transponder 120 gegeben ist. Somit bewirkt der zusätzliche Sender 215 eine Erweiterung der Reichweite des RFID-Lesegeräts 110 für die Kommunikation mit dem RFID-Transponder 120, d.h. eine Erweiterung des gesamten Identifikationsbereichs um den vorgegebenen Soll-Raumbereich 230 bezogen auf den Standard-Identifikationsbereich 134.

Diese Erweiterung des Identifikationsbereichs wird durch die Anordnung der Vorrichtung 210 mit dem Sender 215 bezogen auf den Soll-Raumbereich 230 unterstützt. Die Position des Senders 215 ist derart ausgewählt, dass der Abstand zwischen dem Sender 215 und dem Soll-Raumbereich 230 bzw. dem RFID-Transponder 120 in diesem geringer als der Abstand des Raumbereichs 230 bzw. RFID-Transponders 120 zum RFID-Lesegerät 110 ist. Ferner kann das RFID-System 220 mehrere Vorrichtungen 210 mit jeweiligen Sendern 215 umfassen, deren Position jeweils derart ausgewählt werden kann, dass der Energieinhalt der elektromagnetischen Wellen zur Energieversorgung des RFID-Transponders innerhalb des Soll-Raumbereichs 230 optimiert ist.

Die Vorrichtung 210 mit dem Sender 215 ist bei der ersten Ausführungsform des RFID-Systems, die in Fig. 2 veranschaulicht ist, eine eigenständige Einheit ohne signaltechnische Kommunikation mit dem RFID-Lesegerät 110. Ferner emittiert der Sender 215 die elektromagnetischen Wellen kontinuierlich im sogenannten cw-Betrieb (cw von Engl.: continuous wave) bzw. Dauerstrich-Betrieb. Alternativ kann das RFID-Lesegerät 110 jedoch mit der Vorrichtung 210 in signaltechnischer Verbindung stehen, um den Sender 215 zu steuern.

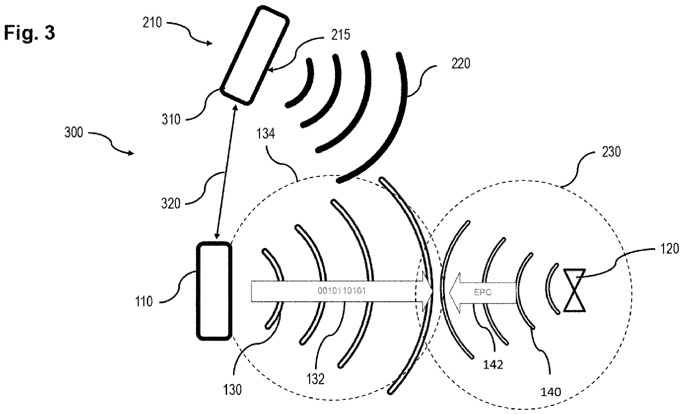

Fig. 3 zeigt eine zweite Ausführungsform des erfindungsgemäßen RFID-Systems, die mit 300 bezeichnet ist. Die zweite Ausführungsform des RFID-Systems 300 unterscheidet sich von der in Fig. 2 gezeigten ersten Ausführungsform lediglich dadurch, dass der Sender 215 für die elektromagnetischen Wellen 220 in ein sekundäres RFID-Lesegerät 310 integriert ist. Das RFID-Lesegerät 110 des RFID-Systems 300 kann somit als primäres oder Master-RFID-Lesegerät bezeichnet werden. Das sekundäre RFID-Lesegerät 310 stellt daher bei der zweiten Ausführungsform von Fig. 3 die Vorrichtung 210 zur Erweiterung der Reichweite des RFID-Systems 300 dar.

Ansonsten gilt die Beschreibung von Fig. 2 gilt sinngemäß ebenfalls für die zweite Ausführungsform des RFID-Systems 300. Dies gilt vor allen für die zusätzliche Energieversorgung des RFID-Transponders 120 mittels der elektromagnetischen Wellen 220 und die Erweiterung der Reichweite bzw. Standard-Identifikationsbereichs 134 des primären RFID-Lesegeräts 110 um den vorgegebenen Soll-Raumbereich 230.

Zusätzlich stehen das primäre RFID-Lesegerät 110 und das sekundäre RFID-Lesegerät 310 in einer kommunikativen Verbindung, die in Fig. 3 durch den Doppelpfeil 320 dargestellt ist. Das primäre RFID-Lesegerät 110 kommuniziert mit dem sekundären RFID-Lesegerät 310, indem Sendesignale bzw. Daten in beiden Richtungen übertragen werden. Das primäre RFID-Lesegerät 110 überträgt bei einer solchen Kommunikation Informationen zur Kommunikation mit dem RFID-Transponder 120 an das sekundäre RFID-Lesegerät 310. Zusätzlich zu der Energieversorgung mittels der elektromagnetischen Wellen 220 überträgt das sekundäre RFID-Lesegerät 310 folglich diese Informationen zur Kommunikation mit dem RFID-Transponder 120, beispielsweise ebenfalls das Abfragesignal 132 (vgl. Fig. 1).

Die Reichweite für eine Identifikation des RFID-Transponders 120 innerhalb des RFID-Systems 300 wird bei der zweiten Ausführungsform von Fig. 3 folglich nicht nur durch die zusätzliche Energieversorgung des RFID-Transponders 120 innerhalb des vorgegebenen Raumbereichs 230 mittels der elektromagnetischen Wellen 220 erweitert, sondern auch durch die zusätzliche Kommunikationsmöglichkeit des sekundären RFID-Lesegeräts 310 mit dem RFID-Transponder 120. Im RFID-System 300 von Fig. 3 wirken folglich zwei RFID-Lesegeräte 110, 310 bei der Erweiterung der Reichweite zusammen.

Das sekundäre RFID-Lesegerät 310 erweitert die Reichweite des primären RFID-Lesegeräts 110 somit einerseits durch die zusätzliche Energieversorgung mittels des Senders 215, der die elektromagnetischen Wellen für den RFID-Transponder 120 emittiert, und andererseits zusätzlich durch die Kommunikation zwischen dem primären und sekundären RFID-Lesegerät 110, 310. Dadurch ist es möglich, die Kommunikation zwischen dem primären RFID-Lesegerät 110 und dem RFID-Transponder 120 auch über das sekundäre RFID-Lesegerät 310 durchzuführen.

Wie bei der ersten Ausführungsform von Fig. 2 kann auch das RFID-System 300 gemäß der zweiten Ausführungsform von Fig. 3 mehrere sekundäre RFID-Lesegeräte 310 umfassen, die derart angeordnet sein können, dass der Energieinhalt der elektromagnetischen Wellen innerhalb des Soll-Raumbereichs 230 und auch die Kommunikation zwischen den RFID-Lesegeräten 310 und dem RFID-Transponder 120 optimiert ist. Insbesondere kann das primäre RFID-Lesegerät 110 als Interrogator arbeiten und als einziges RFID-Lesegerät ein Signal zur Aktivierung bzw. Abfrage des RFID-Transponders 120 senden, während ein oder mehrere sekundäre RFID-Lesegeräte 310 lediglich als Empfänger arbeiten, indem sie eine sogenannte Listen-Before-Talk-Routine ausführen. Bei einer solchen Ausgestaltung dienen die sekundären RFID-Lesegeräte 310 jedoch weiterhin zur zusätzlichen Energieversorgung des RFID-Transponders 120 innerhalb des Soll-Raumbereichs 230.

### Bezugszeichenliste

- 100: RFID-System gemäß dem Stand der Technik
- 110: primäres RFID-Lesegerät
- 120: RFID-Transponder
- 130: von dem RFID-Lesegerät emittierte elektromagnetische Wellen
- 132: Abfragesignal
- 134: Standard-Identifikationsbereich
- 140: von dem RFID-Transponder emittierte elektromagnetische Wellen
- 142: Antwortsignal
- 200: erfindungsgemäßes RFID-System
- 210: Vorrichtung zur Erweiterung der Reichweite des RFID-Lesegeräts
- 215: Sender
- 220: elektromagnetische Wellen zur Bereichserweiterung
- 230: Soll-Raumbereich
- 300: erfindungsgemäßes RFID-System
- 310: sekundäres RFID-Lesegerät
- 320: Kommunikation zwischen primärem und sekundärem RFID-Lesegerät

## Patentansprüche

1. System (200, 300) mit
einem primären RFID-Lesegerät (110),
einem RFID-Transponder (120) und
einer Vorrichtung (210) zur Erweiterung der Reichweite des primären RFID-Lesegeräts (110), die einen Sender (215) aufweist, der ausgebildet ist, elektromagnetische Wellen in einen vorgegebenen Raumbereich (230) zu emittieren,
wobei der RFID-Transponder (120) ausgebildet ist, die elektromagnetischen Wellen zu empfangen, die von dem Sender (215) emittiert werden.

2. System (200, 300) nach Anspruch 1, wobei
der Sender (215) die elektromagnetischen Wellen kontinuierlich emittiert.

3. System (200, 300) nach Anspruch 1 oder 2, wobei
der Sender (215) mindestens zwei Antennen aufweist.

4. System (200, 300) nach einem der Ansprüche 1 bis 3, wobei der Sender (215) in ein sekundäres RFID-Lesegerät (310) integriert ist, welches von dem primären RFID-Lesegerät (110) verschieden ist.

5. System (200, 300) nach Anspruch 4, wobei
der Sender (215) der Vorrichtung zur Erweiterung der Reichweite in das sekundäre RFID-Lesegerät (310) integriert ist, und
das primäre RFID-Lesegerät (110) ausgebildet ist, Informationen zur Kommunikation mit dem RFID-Transponder (120) an das sekundäre RFID-Lesegerät (310) zu übertragen.

6. System (200, 300) nach einem der Ansprüche 1 bis 5, wobei das RFID-Lesegerät (110) mit der Vorrichtung (210) in Verbindung steht, um den Sender (215) der Vorrichtung (210) zu steuern.

7. System (200, 300) nach einem der Ansprüche 1 bis 6, wobei dem RFID-Transponder (120) und dem primären RFID-Lesegerät (110) ein primärer Frequenzbereich zugeordnet ist, in dem eine signaltechnische Kommunikation zwischen dem RFID-Transponder (120) und dem primären RFID-Lesegerät (110) erfolgt, und
dem Sender (215) der Vorrichtung (210) ein sekundärer Frequenzbereich zugeordnet ist, der von dem primären Frequenzbereich verschieden ist.

8. System (200, 300) nach einem der Ansprüche 1 bis 7, wobei
dem primären RFID-Lesegerät (110) ein Soll-Raumbereich (230) für eine Kommunikation zwischen dem RFID-Transponder (120) und dem primären RFID-Lesegerät (110) zugeordnet ist und
der Sender der Vorrichtung (210) derart angeordnet ist, dass er die elektromagnetischen Wellen in den Soll-Raumbereich (230) emittiert.

9. RFID-Lesegerät (310), welches eine primäre Sendeeinrichtung zur Kommunikation mit einem RFID-Transponder (120) und eine zusätzliche Sendeeinrichtung (215) aufweist, die zur Energieversorgung des RFID-Transponders (120) elektromagnetische Wellen in einen vorgegebenen Raumbereich (230) emittiert.

10. RFID-Lesegerät (310) nach Anspruch 9,
wobei die zusätzliche Sendeeinrichtung (215) die elektromagnetischen Wellen kontinuierlich emittiert und/oder
der primären Sendeeinrichtung ein primärer Frequenzbereich zugeordnet ist und der zusätzlichen Sendeeinrichtung (215) ein sekundärer Frequenzbereich zugeordnet ist, der von dem primären Frequenzbereich verschieden ist.
